# FASCICULE DE BREVET EUROPEEN

(11) **EP 1 443 299 B1**
(45) Date de publication et mention de la délivrance du brevet: **27.09.2006**
(21) Numéro de dépôt: 03001836.0
(22) Date de dépôt: 29.01.2003
(51) Int. Cl.: G01B 5/012

(54) **Palpeur orientable**
Taststift mit einstellbarer Orientierung
Positionable feeler head

(43) Date de publication de la demande: 04.08.2004
(73) Titulaire: TESA SA, 1020 Renens (CH)
(72) Inventeur: Jordil, Pascal, 1612 Ecoteaux (CH); Zanier, Adriano, 1008 Prilly (CH); Rouge, Claude, 1446 Baulmes (CH)
(74) Mandataire: P&TS Patents & Technology Surveys SA

(56) Documents cités:
- EP-A- 0 392 660
- US-A- 4 888 877
- US-A1- 2001 025 427

## Description

L'invention concerne un palpeur à déclenchement orientable dans l'espace selon une multiplicité de directions. Ce palpeur est destiné à être utilisé plus particulièrement, mais non exclusivement, dans une machine à mesurer manuelle ou automatique, ou bien dans une machine outil comme par exemple une fraiseuse, pour la mesure tridimensionnelle d'une pièce usinée ou en cours d'usinage.

Les palpeurs à déclenchement sont des instruments de mesure utilisés largement, mais pas uniquement, sur des lignes de production de pièces mécaniques pour la vérification exacte des dimensions ou des surfaces des pièces mécaniques. Les palpeurs à déclenchement sont aussi utilisés pour la mesure en trois dimensions de pièces de forme complexe, afin de les reproduire ou de les modéliser.

En général les palpeurs à déclenchement comprennent une partie fixe, destiné à être fixée sur une machine à mesurer ou sur une machine outil, et une touche mobile, comprenant une sphère au bout d'une tige allongée et destinée à être amené en contact avec la pièce à mesurer.

Dans la plupart des applications les palpeurs à déclenchement sont fixés sur le bras mobile d'une machine dont la position dans l'espace est déterminable précisément à l'aide d'un système de mesure manuel ou automatique, comme par exemple des encodeurs de position disposés sur les axes de la machine. Le bras mobile est déplacé dans l'espace pour amener la touche de mesure du palpeur en contact avec la pièce ou la surface à mesurer. Lors du contact une force de déflection est alors appliquée sur la touche, la sortant de sa position initiale de repos. Un capteur réagit au moindre déplacement de la touche générant un signal électrique qui est envoyé soit à l'utilisateur, sous forme de signal lumineux, soit au logiciel de contrôle de la machine qui détermine ainsi à l'aide des données du système de mesure les cordonnées du point de contact dans un référentiel donné. A ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe du palpeur est habituellement réalisée selon le principe de la liaison de Boys, soit par exemple par trois goupilles cylindriques reposant sur six sphères de façon à définir six points de contact entre l'organe fixe et la touche. On connaît toutefois aussi des palpeurs bi- et unidimensionnels.

Lorsque le palpeur est utilisé pour la mesure de pièces de forme complexe, présentant des cavités et des protubérances, il est malaisé ou impossible d'amener la touche en contact avec toute la surface de la pièce sans que la partie fixe du palpeur ou la tige de la touche interfèrent avec des éléments de la pièce à mesurer. Pour pallier cet inconvénient, on connaît des palpeurs permettant d'orienter la touche de contact dans une pluralité de directions dans l'espace. En général deux axes indépendants de rotation sont requis pour couvrir l'ensemble des orientations possibles. Un palpeur de ce type est décrit dans la demande de brevet européen EP-0'392'660-A2.

De préférence les axes de rotation sont indexés, dans le sens qu'ils prévoient un nombre suffisamment grand mais fini de positions de repos prédéterminés et exactement reproductibles. Cette disposition évite de devoir calibrer à nouveau la machine à mesurer après chaque changement de l'orientation de la touche.

Durant la mesure les axes permettant l'orientation du palpeur de l'art antérieur ci-dessus sont bloqués dans une des positions indexées prévues. Lorsqu'une orientation différente du palpeur est requise, l'opérateur doit déverrouiller manuellement les axes, en agissant sur une molette ou sur un levier prévus à cet effet, orienter le palpeur comme requis, et verrouiller à nouveau les axes en repositionnant la molette ou levier dans la position de blocage initiale. Ces manoeuvres peuvent entraîner des erreurs de positionnement, par exemple suite à un mouvement involontaire du premier axe, au moment du positionnement du second.

Un autre inconvénient du palpeur décrit ci-dessus est que les opérations de verrouillage et déverrouillage requièrent l'application d'un couple externe sur la molette de blocage, qui est transmis par le palpeur et son support au bras mobile de la machine à mesurer. Ce couple net provoque des efforts mécaniques sur le support du palpeur, et peut faire bouger tout le palpeur. Pour éviter cet inconvénient, l'opérateur doit maintenir le palpeur immobile lorsqu'il agit sur la molette de blocage, ce qui rend la manoeuvre avec une seule main malaisée ou impossible.

La demande de brevet US2001/0025427 décrit un palpeur articulé comprenant au moins deux articulation tournantes pour aligner l'angle du palpeur. Ce palpeur comprend des vérins à gaz pour verrouiller et déverrouiller les articulations, et des moteurs électriques pour les mettre en rotation. Ces vérins et moteurs, avec leurs dispositifs de commande et d'alimentation, augmentent le poids, le coût et la complexité du dispositif.

Le brevet US4888877 décrit un palpeur articulé ayant des paliers à comportement cinématique reproductible, afin de déplacer angulairement une touche de palpage de façon précise et répétable. La précision de positionnement se base sur des codeurs angulaires à haute résolution qui permettent de contrôler les moteurs des axes dans la manière requise.

Un but de la présente invention est de proposer un palpeur à déclenchement, orientable dans une multiplicité de directions indexées, dont le positionnement est effectué de manière fiable sans risque de d'erreurs de positionnement, sans augmenter la complexité, le poids et le coût du palpeur.

Un autre but de la présente invention est de proposer un palpeur à déclenchement sans les limitations de l'art antérieur.

Selon l'invention ces buts sont atteints par le dispositif qui est l'objet de la revendication indépendante 1. Les modes particuliers de réalisation de l'invention sont définis dans les revendications dépendantes 2 à 21.

La présente invention sera mieux comprise à la lecture de la description donnée à titre d'exemple et illustrée par les figures annexées.
- La figure 1a représente un premier mode de réalisation d'un palpeur à déclenchement selon l'invention ;
- La figure 1b représente une partie fixe du palpeur à déclenchement selon l'invention représenté sur la figure 1a ;
- Les figures 1c et 1d représentent le mécanisme d'indexation du premier axe du palpeur à déclenchement selon l'invention représenté sur la figure 1a ;
- La figure 1e représente de mécanisme de démultiplication utilisé pour dégager le premier axe du palpeur de la figure 1a ;
- Les figures 2a 2b et 2c représentent en coupe et en vue les mécanismes d'indexation et de démultiplication du second axe du palpeur de la figure 1a ;

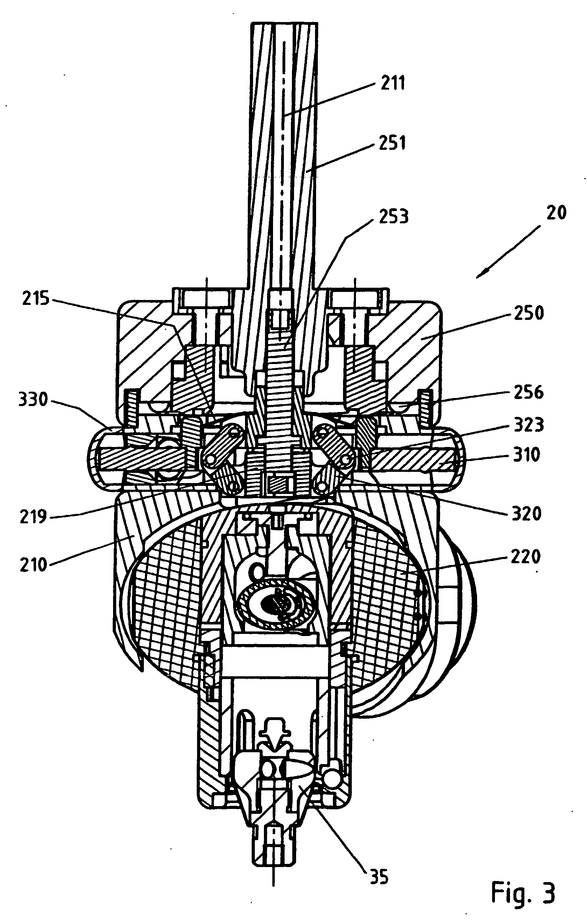

- Les figures 3 et 4, 5a et 5b représentent un deuxième mode d'exécution du palpeur selon l'invention ;

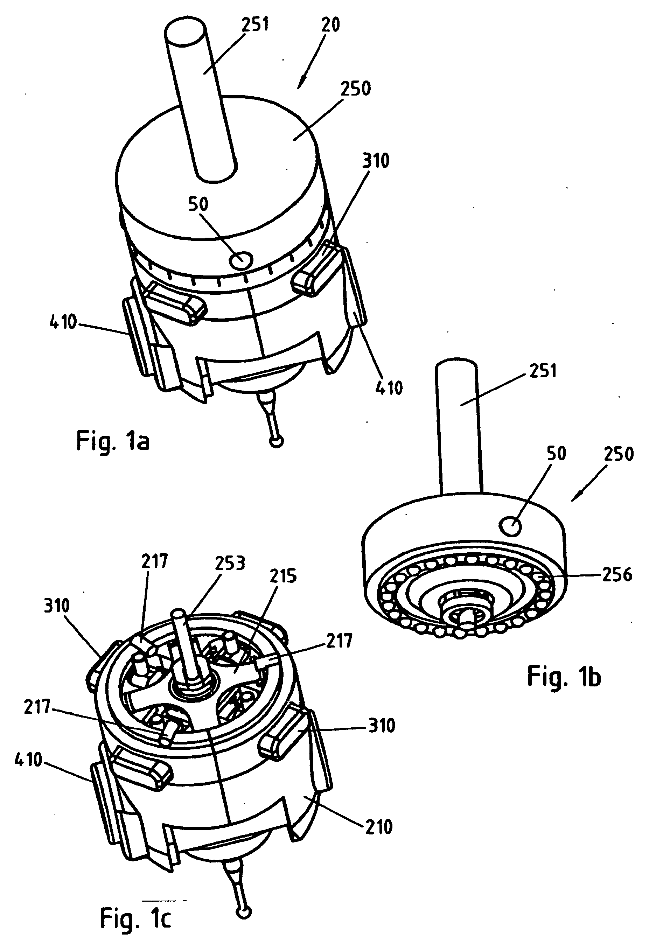

Le premier mode de réalisation de l'invention représenté sur les figures 1a à 1e est un palpeur à déclenchement 20 comprenant une partie fixe 250, représentée en détail sur la figure 1b, destinée à être fixée au bras mobile d'une machine à mesurer, par la tige filetée 251 ou par un autre moyen de fixation connu.

La partie fixe 250 porte sur sa face inférieure 24 sphères 256, régulièrement disposée le long d'une circonférence et partiellement saillants vers le bas. Les sphères 256 définissent 24 positions indexées et écartées de 15 degrés pour le premier axe de rotation du palpeur, comme il est expliqué plus loin. Il est évident qu'on pourrait utiliser un nombre différent de sphères selon le nombre de positions indexées désiré.

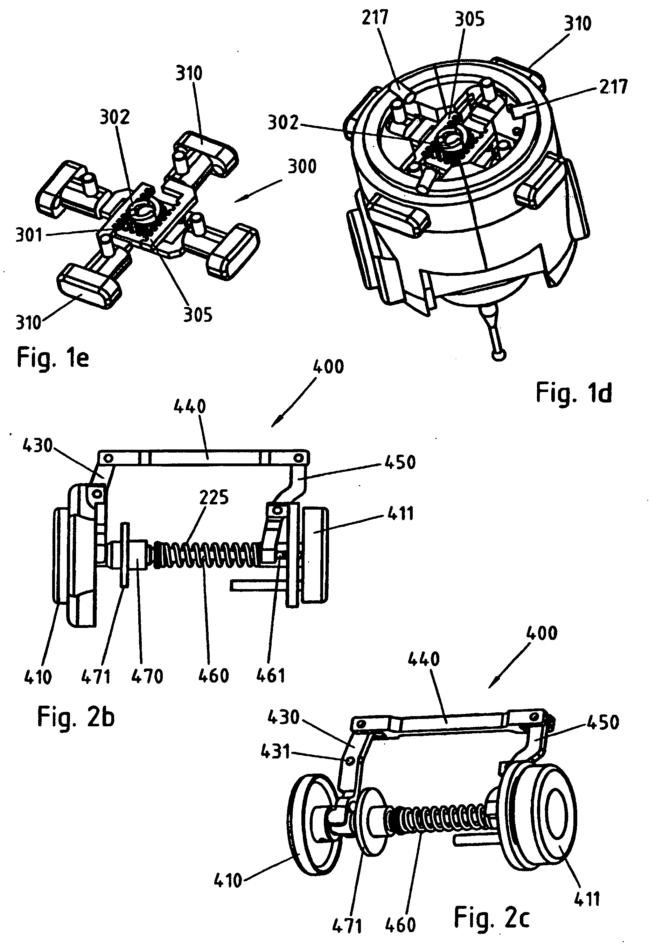

L'élément mobile 210, représenté sur les figures 1c et 1d, porte sur sa face supérieure trois goupilles cylindriques 217. Le ressort plat 215 presse l'élément mobile 210 contre l'élément fixe 250. En cette situation chacune des goupilles 217 appuie sur deux des sphères 256, les six points de contact résultants déterminant la position relative des éléments 250 et 210 de façon précise et reproductible.

Vu la symétrie de rotation de l'élément fixe, l'élément mobile 210 peut assumer 24 positions indexées, écartées de 15 degrés entre elles, autour du premier axe de rotation 211, qui correspond à l'axe géométrique du palpeur. Le même résultat aurait pu être obtenu par d'autres dispositions équivalentes, par exemple en disposant les sphères sur l'élément mobile et les goupilles sur l'élément fixe, ou bien en remplaçant les surfaces sphériques ou cylindriques des goupilles ou des sphères par des plans inclinés, ou encore en utilisant six goupille cylindriques n'ayant chacune qu'un seul point de contact avec une des sphères. Il serait également possible de remplacer le ressort plat 215 par un organe résilient équivalent, par exemple un ressort cylindrique ou à lame ou par un élément réalisé en un matériau synthétique résilient.

Le mécanisme de dégagement 300, représenté sur les figures 1d et 1 e permet d'autoriser la rotation de l'élément mobile 210 autour de l'axe 211. La transmission 300 se compose d'une roue dentée 301, entraînée par les quatre crémaillères 305, et par les surfaces inclinées hélicoïdales 302.

Lorsque deux boutons 310 opposés sont pressés, les crémaillères 305 entraînent en rotation la roue dentée 301 et les plans inclinés 302 qui lui sont solidaires, et qui, glissant sur leurs appuis (non représentés sur les figures), écartent axialement l'élément fixe 250 de l'élément mobile 210. Dans la position écartée les sphères 256 dépassent au dessus des goupilles 217 sans les toucher, et la rotation autour de l'axe 211 est possible.

La force d'appui des goupilles 217 sur les sphères 256 doit être suffisamment élevée pour empêcher tout mouvement accidentel de la partie mobile 210 durant la mesure. Dans ce mode de réalisation particulier on dimensionne le ressort 215 pour une force totale d'appui d'approximativement 30 N, soit environ 10 N par chacun des six points de contact, puisque l'appui est exercé à 60 degrés par rapport à l'axe.

Il serait malaisé d'appliquer directement une force de 30 N sur les boutons 310. Pour cette raison la pente des surfaces inclinées 302 est choisie pour donner un rapport de démultiplication suffisant entre la force radiale exercée sur les boutons 310 et la force axiale qui s'oppose à l'élasticité du ressort 215. Un rapport de réduction de 1:2 comporte une force de manoeuvre aux boutons 310 d'environ 15 N, soit 1.5 Kgf approximativement, que l'utilisateur peut exercer sans grande difficulté. La course des boutons 310 reste contenue, avec ce rapport de réduction, à quelques millimètres.

Les valeurs numériques données ci-dessus doivent être interprétés comme des exemples particulièrement adaptés au mode de réalisation présenté. Il serait possible de choisir des valeurs différentes selon les circonstances, par exemple selon la masse et les dimensions du palpeur.

Pour assurer le dégagement de l'élément mobile 210 autour de l'axe de rotation 211, il est nécessaire d'agir simultanément sur deux boutons opposés 310. De cette manière les forces externes exercées sur le palpeur sont essentiellement en opposition et perpendiculaires à l'axe de rotation 211, la force résultante et le couple résultant sont essentiellement nuls, et tout mouvement involontaire du palpeur est prévenu.

Pendant que les boutons 310 sont pressés selon la direction radiale, l'opérateur peut faire tourner l'élément mobile 210 autour de l'axe 211, en agissant sur les mêmes boutons en direction tangentielle. Cette manoeuvre est très intuitive et peut aisément être réalisée avec deux doigts d'une main. En cette condition l'écartement distance entre les sphères 256 et les goupilles 217 est suffisant pour éviter tout contact ou frottement des surfaces d'indexation, préservant ainsi la précision de positionnement en position indexé. Il n'et donc pas nécessaire de relâcher les boutons 310 pour passer du déverrouillement à la rotation du palpeur puis pour verrouiller à nouveau le palpeur.

Le rapport de réduction et le coefficients de friction des matériaux utilisées sont choisi pour que la transmission 300 soit réversible, de la sorte que l'élément mobile 210 retourne spontanément en position indexée, une fois la pression sur les boutons 310 relâchée, évitant ainsi une utilisation accidentelle en position libre.

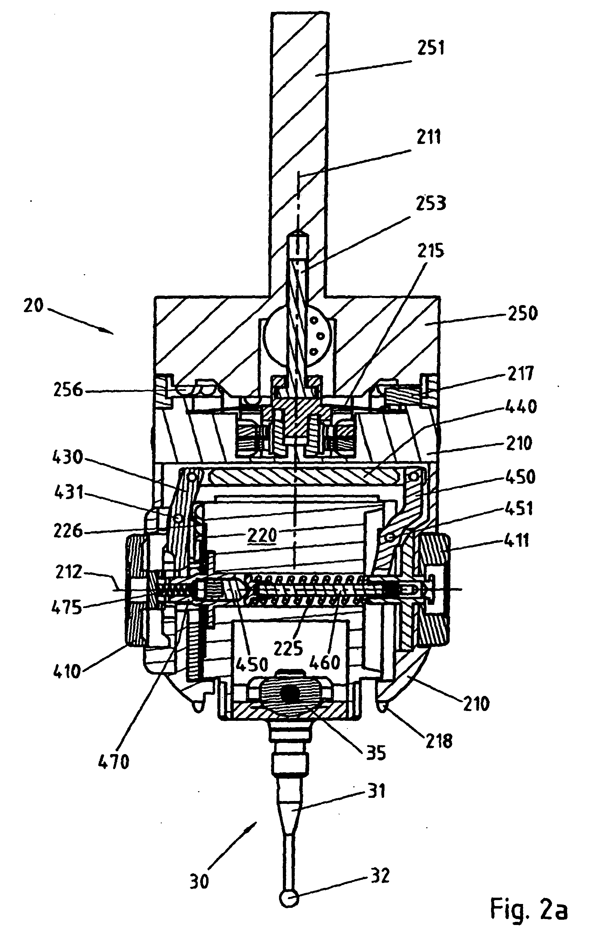

Le premier élément mobile 210 est connecté à un second élément mobile 220, pouvant tourner autour de l'axe de rotation 212, perpendiculaire au premier axe de rotation 211, auquel est fixée une touche mobile 30 de type connu, comme on peut l'apprécier sur la figure 2a.

Le second élément mobile 220 est pressé contre le premier élément mobile 210, dans la direction axiale définie par l'axe de rotation 212, par le ressort de compression 225. Une couronne de sphères 226 est réalisée sur une face verticale de l'élément mobile 220 et interagit avec trois goupilles cylindriques (non représentées sur la figure) placés sur la face adjacente du premier élément mobile 210, pour définir un nombre prédéterminé de position d'indexation exactement reproductibles, de façon analogue à celle expliquée ci-dessus pour la rotation du premier élément mobile 210.

Dans une variante possible, six goupilles cylindriques n'ayant chacune qu'un seul point de contact peuvent être utilisées.

Le système de dégagement et rotation 400 du second élément mobile 220 est représenté sur la figure 2b. Le dégagement s'effectue par pression sur les deux boutons 411 et 410. La force axiale appliquée sur le bouton 410 qui peut coulisser axialement autour de la pièce 470 est transmise par les deux leviers 430 et 450 et le bras horizontal 440, est multipliée et appliquée au ressort 225 par la goupille 461 et la tige 460, afin de le compresser, ce qui supprime la force de contact entre 220 et 210. En ce mode de réalisation on choisit les dimensions des bras des leviers 430, 450 pour obtenir un rapport de réduction de la force de manoeuvre de 1:2, comme pour le premier élément mobile 210. Un deuxième ressort 475, entreposé entre le bouton 410 la pièce 470 pousse axialement vers la droite sur la figure 2a le second élément mobile 220 en autorisant sa rotation.

Lorsque le bouton 410 est pressé le second élément mobile 220 est déplacé vers la droite de la figure 2a, en sorte que les goupilles et les sphères d'indexation 226 ne se touchent plus, et le deuxième élément mobile 220 peut tourner autour de l'axe 212. La rotation est imprimée par l'opérateur au travers du bouton 410 qui est solidarisé angulairement à la pièce 470 par une goupille non visible sur les figures.

Le bouton 411, opposé au bouton 410, a la double fonction d'offrir une surface d'appui au doigt pour exercer une force opposée à celle appliquée sur le bouton 410 et de faciliter la rotation de l'élément 220 avec deux doigts. Le bouton 411 est en fait solidarisé angulairement à l'élément 220 et est entraîné en rotation avec celui-ci. L'utilisation de deux forces essentiellement en opposition évite de transmette des efforts sur le support du palpeur, et de faire bouger tout le palpeur.

L'action du boutons 410 sur le second élément mobile 220 par l'intermédiaire des la tige 460 est substantiellement alignée et opposée à la force exercée par le ressort 225, ce qui assure des mouvements rectilignes et sans coincements.

Le signal électrique généré par la touche 30 est envoyé soit à l'utilisateur, sous forme de signal lumineux émis par la diode lumineuse 50 (figure 1a), soit au logiciel de contrôle de la machine qui détermine ainsi à l'aide des données du système de mesure, les cordonnées du point de contact dans un référentiel donné.

La partie inférieure du palpeur 20 présente un ou plusieurs éléments de protection 218, saillants du corps du palpeur dont la fonction est de protéger le mécanisme d'indexation des chocs contre la pièce à mesurer ou contre la table de support. L'élément de protection 218 peut être un bourrelet usiné directement dans la coque métallique 217, ou bien un élément additionnel en un matériau apte à absorber les chocs, par exemple en caoutchouc ou en élastomère.

Le second élément mobile 220 peut assumer, dans ce mode de réalisation, 7 positions indexées écartés de 15 degrés entre elles, pour un angle total de 90 degrés. Cet angle, en combinaison avec le 360 degrés de rotation possibles pour le premier élément de rotation 210, permet d'orienter la touche 30 dans un nombre de directions uniformément distribuées dans un demi-espace. Il serait toutefois possible de réaliser le dispositif de l'invention avec un nombre générique de positions indexées et des écartements quelconque entre elles.

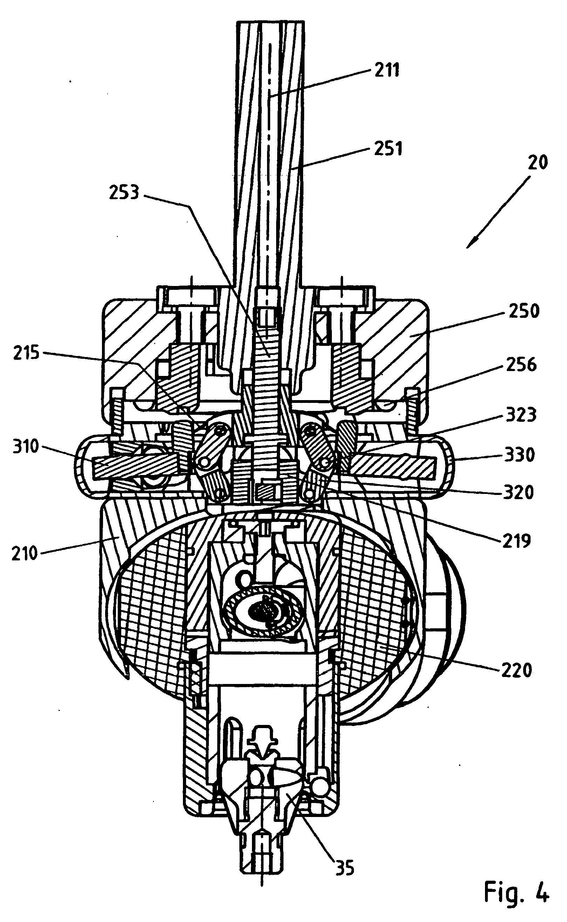

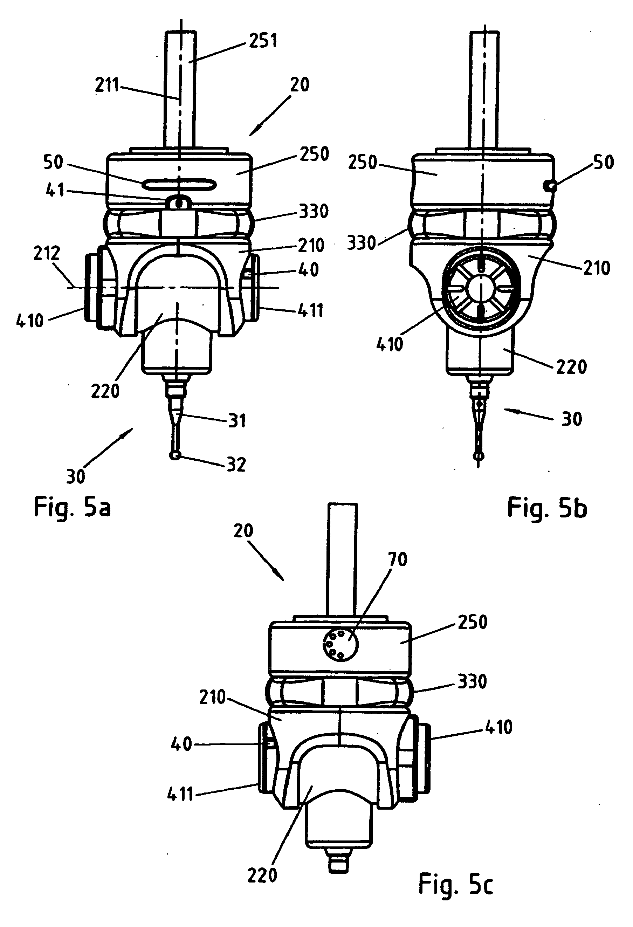

Les figures 4, 5a et 5b illustrent un deuxième mode de réalisation de l'invention, dans lequel le mécanisme de dégagement 300 du premier axe 211 est réalisé avec quatre paires de biellettes identiques et symétriques 320.

Dans ce mode de réalisation, chaque paire de biellettes 320 est articulée par rapport à un point central 323 et les forces externes appliquées aux boutons 310 sont transmises auxdits points centraux 323, lorsque les deux bouts des deux biellettes d'une paire appuient l'un sur l'élément fixe 250, et l'autre sur le premier élément mobile 210.

Dans cette disposition, le rapport de réduction entre la force axiale exercée sur l'élément mobile 210 et la force de manoeuvre radiale appliquée aux boutons 310 est proportionnel à la tangente du demi angle d'ouverture entre les biellettes 320. Il en résulte un rapport de réduction croissant avec l'écartement entre les éléments 250 et 210 et l'angle entre les biellettes 320. Cette variabilité du rapport de réduction est avantageuse car la force requise pour maintenir les boutons pressés en fin de course est minime, ce qui facilite l'opération d'orientation fine de la touche 30.

Cette caractéristique avantageuse est également possible dans le premier mode de réalisation par l'utilisation d'une surface non plane en lieu du plan incliné 302.

Lorsque les boutons 310 sont pressés à fond, l'écartement entre les sphères 226 et les goupilles à elles juxtaposées est maintenu, et les sphères et les goupilles ne peuvent en aucun cas entrer en contact entre elles ou avec d'autres éléments de la mécanisme du palpeur. En cette condition l'usure des surfaces d'indexation est réduite au minimum indispensable, et la précision d'indexation est maintenue dans le temps.

Lorsque l'opérateur presse sur deux boutons opposés 310 la force résultante sur le premier élément mobile 210 par l'intermédiaire des biellettes 320 est substantiellement axiale par rapport à l'axe de rotation 211, soit substantiellement alignée et opposée à la force exercée par le ressort 215, ce qui assure des mouvements rectilignes et sans coincements. En revanche si l'opérateur pousse asymétriquement sur un seul des boutons 310 la composante horizontale de la force résultante produit une friction élevée entre la tige 253 et la douille 219 empêchant le dégagement du premier élément mobile 210. Cette caractéristique avantageuse permet d'éviter les manipulations intempestives et involontaires.

Les boutons 310 sont entourés par une membrane protectrice annulaire en caoutchouc ou en élastomère 330, qui a la fonction de protéger le mécanisme interne des saletés et poussières, mais aussi d'empêcher la transmission de chaleur des mains de l'opérateur au mécanisme d'indexation interne, qui aurait des conséquences néfastes sur la précision d'indexation. Dans le même but, les boutons 410 et 411, servant à la rotation et au dégagement du second axe 212, sont aussi réalisés de préférence en un matériau synthétique ayant des bonnes propriétés d'isolation thermique.

Une fenêtre 30 est prévue sur l'élément de support 250 permettant de lire l'angle de rotation relatif au premier axe 211 sur une échelle gravée ou imprimée sur le premier élément mobile 210, comme on peut l'apprécier sur les figures 5a et 5b.

L'angle de rotation relatif au second axe 212 peut être lu sur les deux fenêtres 40 découpées dans la couronne externe du bouton 411 et visibles sur les figures 5a et 5c. Deux fenêtres sont nécessaires en ce cas pour permettre une visibilité optimale dans toutes les orientations possibles du palpeur.

La touche à déclenchement 30 réagit au moindre contact avec la surface de la pièce à mesurer en générant une impulsion électrique. L'impulsion est transmise, par l'intermédiaire d'un circuit de traitement électronique non représenté, au connecteur 70, pour connexion avec le dispositif de contrôle de la machine à mesurer, et au voyant lumineux 50. Le voyant comprend dans ce mode de réalisation une diode lumineuse, mais pourrait comprendre en alternative d'autres émetteurs de lumière connus, comme par exemple des éléments électroluminescents en feuille ou en fil. La diode lumineuse est surmontée par un diffuseur optique de lumière, permettant d'apercevoir la lumière émise dans une grande plage d'angles d'observation.

Dans un mode alternative de réalisation de l'invention, le voyant 50 est remplacé par plusieurs voyants, disposés à des endroits différents du palpeur, en sorte qu'au moins un voyant soit visible de chaque angle d'observation possible.

Dans une autre version du dispositif de l'invention le voyant 50 comprend un ou plusieurs conducteurs de lumière pour émettre la lumière produite par une ou plusieurs sources lumineuses à partir de différents endroits de la surface du palpeur, en sorte que l'indication lumineuse soit visible de chaque angle d'observation possible.

Le dispositif de l'invention pourrait aussi être réalisé sans avoir recours à un mécanisme d'indexation, mais avec des simples mécanismes à friction autorisant le blocage des axes dans un nombre infini d'orientations.

L'invention comprend aussi un mode de réalisation dans lequel la rotation et le dégagement des axes sont actionnés par des actuateurs automatiques, par exemple des moteurs et/ou des solénoïdes électriques.

Dans un autre mode de réalisation de l'invention, la rotation des axes du palpeur est assuré par des servomoteurs comprenant des encodeurs pour la mesure des angles d'orientation de la touche. En ce cas le mécanisme d'indexation décrit ci-dessus peut être préservé, ou supprimé si la précision de positionnement des servomoteurs est suffisante pour les applications envisagées.

## Revendications

1. Palpeur à déclenchement orientable (20) pour orienter une touche de mesure (30) relativement à un appareil de mesure comprenant : un élément de support (250) ;
un premier élément mobile (210) connecté audit élément de support (250) par un premier axe (211) pour tourner ledit premier élément mobile (210) relativement audit élément de support (250);
un deuxième élément mobile (220) connecté audit premier élément mobile (210) par un deuxième axe (212) pour tourner ledit deuxième élément mobile (220) relativement audit premier élément mobile (210);
un premier organe résilient (215) arrangé pour presser ledit premier élément mobile (210) contre ledit élément de support (250) et maintenir ledit premier élément mobile (210) en une position bloquée, interdisant la rotation dudit premier élément mobile (210),
un deuxième organe résilient (225), actionnable indépendamment dudit premier organe résilient (215), arrangé pour presser ledit deuxième élément mobile (220) contre ledit premier élément mobile et maintenir ledit deuxième élément mobile (220) en une position bloquée, interdisant la rotation dudit deuxième élément mobile (220),
un premier actuateur (300), s'opposant audit premier organe résilient (215), pour dégager ledit premier élément mobile (210), permettant la rotation dudit premier élément mobile autour dudit premier axe (211) et un deuxième actuateur (400), indépendant dudit premier actuateur (300), pour dégager ledit deuxième élément mobile (220), permettant la rotation dudit deuxième élément mobile (220) autour dudit deuxième axe (212)
**caractérisé en ce que**
ledit premier actuateur (300) et/ou ledit deuxième actuateur (400) dégagent ledit premier, respectivement deuxième, élément mobile par l'action de deux forces externes essentiellement symétriques et opposées appliquées audit premier, respectivement deuxième, actuateur.

2. Palpeur selon la revendication 1, dans lequel le dégagement dudit premier élément mobile (210), et/ou dudit deuxième élément mobile (220) est effectué par déplacement dans la direction dudit premier, respectivement deuxième, axe (211, 212).

3. Palpeur selon la revendication 1, comprenant des premiers éléments d'indexation (256, 217) pour définir une multiplicité de positions angulaires prédéterminés et reproductibles pour ledit premier élément mobile (210) et/ou des deuxièmes éléments d'indexation (226, 227) pour définir une multiplicité de positions angulaires prédéterminés et reproductibles pour ledit deuxième élément mobile (220).

4. Palpeur selon la revendication 1, comprenant une touche de mesure (30) fixée audit deuxième élément mobile (220).

5. Palpeur selon la revendication 1, dans laquelle ledit premier actuateur (300) et/ou ledit deuxième actuateur (400) entraînent en rotation ledit premier, respectivement deuxième, élément par l'action d'un couple de forces externes appliqué audit premier, respectivement deuxième, actuateur.

6. Palpeur selon la revendication 1, dans laquelle ledit premier actuateur (300) et/ou ledit deuxième actuateur (400) sont arrangés pour cesser leur action lorsque les deux dites forces externes symétriques et opposées s'interrompent.

7. Palpeur selon la revendication 1, dans laquelle ledit premier actuateur (300) et/ou ledit deuxième actuateur (400) comprennent un mécanisme de démultiplication, pour réduire l'intensité de la force requise pour dégager ledit premier, respectivement deuxième, élément mobile.

8. Palpeur selon la revendication 7, dans laquelle ledit mécanisme de démultiplication comprend au moins deux paires de biellettes symétriques, chaque paire étant articulée par rapport à un point central, lesdites forces externes étant transmises auxdits points centraux.

9. Palpeur selon la revendication 7, dans laquelle ledit mécanisme de démultiplication comprend au moins une surface hélicoïdale formant un plan incliné ou une surface courbe inclinée et entraînée en rotation par au moins deux crémaillères sur lesquelles agissent lesdites forces externes.

10. Palpeur selon la revendication 7, dans laquelle ledit mécanisme de démultiplication comprend au moins un levier à bras inégaux.

11. Palpeur selon la revendication 1, dans laquelle lesdites deux forces externes ont une direction essentiellement perpendiculaire audit premier axe (211), et lesdites deux forces externes sont supportées par au moins deux boutons placés sur ledit palpeur en positions diamétralement opposées par rapport audit premier axe (211).

12. Palpeur selon la revendication 7, dans laquelle ledit mécanisme de démultiplication est arrangé pour fournir un rapport de démultiplication croissant, pour réduire ultérieurement la force requise pour maintenir ledit premier, respectivement deuxième, élément mobile en position dégagée.

13. Palpeur selon la revendication 1, comprenant une ou plusieurs fenêtres pour indiquer la position angulaire dudit premier, respectivement deuxième élément mobile.

14. Palpeur selon la revendication 13, comprenant au moins deux fenêtres pour indiquer la position dudit deuxième élément mobile.

15. Palpeur selon la revendication 1, comprenant une indication lumineuse de grande taille pour permettre le contrôle du fonctionnement du palpeur dans toutes les positions de mesure.

16. Palpeur selon la revendication 15, comprenant plusieurs éléments émetteurs de lumière placés en diverses positions pour permettre le contrôle du fonctionnement du palpeur dans toutes les positions de mesure.

17. Palpeur selon la revendication 1, comprenant une couche externe thermiquement isolante, pour éviter la conduction de la chaleur des mains dans le palpeur (20).

18. Palpeur selon la revendication 3, comprenant un mécanisme pour maintenir l'écartement desdites premiers et/ou deuxièmes éléments d'indexation lors de la rotation desdits premier et/ou deuxième éléments mobiles.

19. Palpeur selon la revendication 1, comprenant des éléments de protection (218), saillants de la partie adjacente à la touche (30) du corps dudit palpeur (20), pour protéger la mécanique interne lors d'un choc accidentel dudit palpeur (20).

20. Palpeur selon la revendication 1, dans laquelle l'action dudit premier actuateur (300) sur ledit premier élément mobile (210) est substantiellement alignée et opposée à la force exercée par ledit premier élément résilient (215) sur ledit premier élément mobile (210).

21. Palpeur selon la revendication 1, dans laquelle l'action dudit deuxième actuateur (400) sur ledit deuxième élément mobile (220) est substantiellement alignée et opposée à la force exercée par ledit deuxième élément résilient (225) sur ledit deuxième élément mobile (220).

## Claims

1. Positionable touch-triggered probe (20) for orienting a measuring feeler (30) relative to a measuring apparatus, comprising:
a supporting element (250);
a first mobile element (210) connected to said supporting element (250) through a first axis (211) for turning said first mobile element (210) relative to said supporting element (250);
a second mobile element (220) connected to said first mobile element (210) through a second axis (212) for turning said second mobile element (220) relative to said first mobile element (210);
a first resilient device (215) for pressing said first mobile element (210) against said supporting element (250) and holding said first mobile element (210) in a locked position, preventing said first mobile element (210) from rotating;
a second resilient device (225), that can be actuated independently from said first resilient device (215), arranged for pressing said second mobile element (220) against said first mobile element and holding said second mobile element (220) in a locked position, preventing said second mobile element from rotating (220);
a first actuator (300) in opposition to said first resilient device (215), for disengaging said first mobile element (210), allowing said first mobile element to rotate around said first axis (211), and a second actuator (400), independent from the first actuator (300), for disengaging said second mobile element (220), allowing said second mobile element (220) to rotate around said second axis (212)
**characterized in that**
said first actuator (300) and/or said second actuator (400) disengage said first respectively second mobile element by the action of two external forces essentially symmetrical and opposed being applied to said first respectively second actuator.

2. Probe according to claim 1, wherein the disengaging of said first mobile element (210) and/or of said second mobile element (220) is effected by displacement in the direction of said first respectively second axis (211, 212).

3. Probe according to claim 1, comprising first indexing elements (256, 217) for defining a multiplicity of predetermined and reproducible angular positions for said first mobile element (210) and/or second indexing elements (226, 227) for defining a multiplicity of predetermined and reproducible angular positions for said second mobile element (220).

4. Probe according to claim 1, comprising a measuring feeler (30) fastened to said second mobile element (220).

5. Probe according to claim 1, wherein said first actuator (300) and/or said second actuator (400) drive said first respectively second element in rotation through the action of a torque of external forces applied to said first respectively second actuator.

6. Probe according to claim 1, wherein said first actuator (300) and/or said second actuator (400) are designed to cease their action when the two said external symmetrical and opposed forces are interrupted.

7. Probe according to claim 1, wherein said first actuator (300) and/or said second actuator (400) comprise a demultiplying mechanism for reducing the intensity of the force required for disengaging said first respectively second mobile element.

8. Probe according to claim 7, wherein said demultiplying mechanism comprises at least two pairs of symmetrical connecting rods, each pair being articulated relative to a central point, said external forces being transmitted to said central points.

9. Probe according to claim 7, wherein said demultiplying mechanism comprises at least one helical surface forming an inclined plane or an inclined curved surface and driven in rotation by at least two racks on which said external forces are exerted.

10. Probe according to claim 7, wherein said demultiplying mechanism comprises at least one lever with unequal arms.

11. Probe according to claim 1, wherein said two external forces have a direction essentially perpendicular to said first axis (211) and said two external forces are supported by at least two buttons placed on said probe in positions diametrically opposed relative to said first axis (211).

12. Probe according to claim 7, wherein said demultiplying mechanism is designed to supply an increasing demultiplication ratio for ultimately reducing the force required for keeping said first respectively second mobile element in disengaged position.

13. Probe according to claim 1, comprising one or several windows for indicating the angular position of said first respectively second mobile element.

14. Probe according to claim 13, comprising at least two windows for indicating the position of said second mobile element.

15. Probe according to claim 1, comprising a large-size light indicator allowing the probe's functioning to be controlled in all measuring positions.

16. Probe according to claim 15, comprising several light-emitting elements placed in various positions for allowing the probe's functioning to be controlled in all measuring positions.

17. Probe according to claim 1, comprising an external thermically insulating layer for avoiding the conduction of heat from the hands into the probe (20).

18. Probe according to claim 3, comprising a mechanism for keeping apart said first and/or second indexing elements during rotation of said first and/or second mobile elements.

19. Probe according to claim 1, comprising protecting elements (218) protruding from the part of the body of said probe (30) adjacent to the feeler (30), for protecting the internal mechanism during an accidental shock of said probe (20).

20. Probe according to claim 1, wherein the action of said first actuator (300) on said first mobile element (210) is substantially aligned and opposed to the force exerted by said first resilient element (215) onto said first mobile element (210).

21. Probe according to claim 1, wherein the action of said second actuator (400) on said second mobile element (220) is substantially aligned and opposed to the force exerted by said second resilient element (225) onto said second mobile element (220).

## Patentansprüche

1. Auslösungstaster mit einstellbarer Orientierung (20) zum Orientieren eines Taststifts (30) in Bezug auf einen Messapparat, mit:
einem Stützelement (250);
einem ersten beweglichen Element (210), durch eine erste Achse (211) mit dem besagten Stützelement (250) verbunden, um das besagte erste bewegliche Element (210) in Bezug auf das besagte Stützelement (250) zu drehen;
einem zweiten beweglichen Element (220), durch eine zweite Achse (212) mit dem besagten ersten beweglichen Element (210) verbunden, um das besagte zweite bewegliche Element (220) in Bezug auf das besagte erste beweglich Element (210) zu drehen;
einem ersten elastischen Organ (215), angeordnet um das erste mobile Element (210) gegen das besagte Stützelement (250) zu drücken und das erste bewegliche Element (210) in einer verriegelten Position zu halten, die das Drehen des besagten ersten beweglichen Elements (210) verbietet,
einem zweiten elastischen Organ (225), das unabhängig vom ersten elastischen Organ (215) betätigt werden kann, angeordnet um das zweite mobile Element (220) gegen das besagte erste bewegliche Element (210) zu drücken und das zweite bewegliche Element (220) in einer verriegelten Position zu halten, die das Drehen des besagten zweiten beweglichen Elements (220) verbietet,
einem ersten Antrieb (300), welcher dem ersten elastischen Organ (215) entgegenwirkt, um das besagte erste bewegliche Element (210) zu lösen, was das Drehen des besagten ersten beweglichen Elements um die besagte erste Achse (211) erlaubt, und einem zweiten Antrieb (400), unabhängig vom ersten besagten Antrieb (300), um das besagte zweite bewegliche Element (220) zu lösen, was das Drehen des besagten zweiten beweglichen Elements (220) um die besagte zweite Achse (212) erlaubt,
**dadurch gekennzeichnet,**
**dass** der besagte erste Antrieb (300) und/oder der besagte zweite Antrieb (400) das erste bzw. zweite bewegliche Element lösen, durch Einwirkung von zwei externen, wesentlich symmetrischen und entgegen gesetzten Kräften, welche auf den ersten bzw. zweiten Antrieb angewendet werden.

2. Taster gemäss Anspruch 1, worin das Lösen des ersten beweglichen Elements (210) und/oder des besagten zweiten beweglichen Elements (220) durch Verschiebung in die Richtung der ersten bzw. zweiten Achse (211, 212) erfolgt.

3. Taster gemäss Anspruch 1, mit ersten Indexierungselementen (256, 217) zur Bestimmung einer Vielzahl von vorbestimmten und reproduzierbaren Winkelpositionen für das erste bewegliche Element (210), und/oder zweiten Indexierungselementen (226, 227) zur Bestimmung einer Vielzahl von vorbestimmten und reproduzierbaren Winkelpositionen für das zweite bewegliche Element (220).

4. Taster gemäss Anspruch 1, mit einem auf das zweite bewegliche Element (220) befestigen Taststift (30).

5. Taster gemäss Anspruch 1, worin der besagte erste Antrieb (300) und/oder der besagte zweite Antrieb (400) das besagte erste bzw. zweite Element durch Einwirkung eines Moments von auf den ersten bzw. zweiten Antrieb angewendeten externen Kräften drehen.

6. Taster gemäss Anspruch 1, worin der besagte erste Antrieb (300) und/oder der besagte zweite Antrieb (400) angeordnet sind, um ihre Tätigkeit einzustellen, wenn die besagten zwei externen, symmetrischen und entgegen gesetzten Kräften unterbrochen werden.

7. Taster gemäss Anspruch 1, worin der besagte erste Antrieb (300) und/oder der besagte zweite Antrieb (400) einen Demultiplikationsmechanismus umfassen, um die Intensität der zum Lösen des ersten bzw. zweiten beweglichen Elements benötigten Kraft zu verringern.

8. Taster gemäss Anspruch 7, worin der Demultiplikationsmechanismus mindestens zwei Paare von symmetrischen Stangen umfasst, wobei jedes Paar in Bezug auf einen zentralen Punkt artikuliert ist, wobei die besagten externen Kräfte an die zentralen Punkte übermittelt werden.

9. Taster gemäss Anspruch 7, worin der Demultiplikationsmechanismus mindestens eine schneckenförmige Fläche umfasst, welche eine schräge Ebene oder eine schräge gebogene Fläche bildet, die durch mindestens zwei Zahnstangen, auf welche die besagten externen Kräften wirken, gedreht wird.

10. Taster gemäss Anspruch 7, worin der Demultiplikationsmechanismus mindestens einen Hebel mit ungleichen Armen umfasst.

11. Taster gemäss Anspruch 1, worin die besagten zwei externen Kräfte eine zur ersten Achse (211) wesentlich senkrechten Richtung aufweisen, und die besagten zwei externen Kräfte durch mindestens zwei Knöpfe getragen werden, welche auf dem besagten Taster an ganz entgegen gesetzten Positionen in Bezug auf die erste Achse (211) angebracht werden.

12. Taster gemäss Anspruch 7, worin der besagte Demultiplikationsmechanismus so angeordnet ist, um einen steigenden Demultiplikationsgrad zu liefern, um später die für das Halten des ersten bzw. zweiten beweglichen Elements in gelöster Position benötigte Kraft zu verringern.

13. Taster gemäss Anspruch 1, mit einem oder mehreren Fenstern, um die Winkelposition des ersten bzw. zweiten beweglichen Elements anzuzeigen.

14. Taster gemäss Anspruch 13, mit mindestens zwei Fenstern, um die Position des zweiten beweglichen Elements anzuzeigen.

15. Taster gemäss Anspruch 1, mit einer Leuchtanzeige grosser Dimensionen, um die Kontrolle des Funktionierens des Tasters in allen Messpositionen zu erlauben.

16. Taster gemäss Anspruch 15, mit mehreren, an verschiedenen Positionen angeordneten Licht strahlenden Elementen, um die Kontrolle des Funktionierens des Tasters in allen Messpositionen zu erlauben.

17. Taster gemäss Anspruch 1, mit einer externen thermisch isolierende Schicht, um die Übertragung der Hitze der Hände in den Taster (20) zu verhindern.

18. Taster gemäss Anspruch 3, mit einem Mechanismus, um den Abstand der ersten und/oder zweiten Indexierungselemente während des Drehens des ersten und/oder zweiten beweglichen Elements zu halten.

19. Taster gemäss Anspruch 1, mit Schutzelementen (218), welche aus dem Teil des Körpers des besagten Tasters (20) neben dem Taststift (30) herausragen, um den internen Mechanismus bei einem zufälligen Stoss des besagten Tasters (20) zu schützen.

20. Taster gemäss Anspruch 1, worin die Wirkung des besagten ersten Antriebs (300) auf das erste bewegliche Element (210) wesentlich ausgerichtet und entgegen gesetzt zur vom ersten elastischen Element (215) auf das erste bewegliche Element (210) ausgeübte Kraft ist.

21. Taster gemäss Anspruch 1, worin die Wirkung des besagten zweiten Antriebs (400) auf das zweite bewegliche Element (220) wesentlich ausgerichtet und entgegen gesetzt zur vom zweiten elastischen Element (225) auf das zweite bewegliche Element (210) ausgeübte Kraft ist.
